# EUROPEAN PATENT APPLICATION

(11) **EP 1 860 541 A2**
(43) Date of publication of application: **28.11.2007**
(21) Application number: 07252117.2
(22) Date of filing: 23.05.2007
(51) Int. Cl.: G06F 3/048

(54) **Improvement in or relating to electronic devices**

(30) Priority: 24.05.2006 US 440717
(71) Applicant: Nokia Corporation, 02150 Espoo (FI)
(72) Inventor: Dalby, Anthony, Ealing London W5 4ER (GB); Meyer, Axel E., 00850 Helsinki (FI); Sermon, William, Chalfont St. Giles Buckinghamshire HP8 4LW (GB); Shirgaonkar, Sameer, Clapham London SW4 9LS (GB); Tompkin, Crispian, Los Angeles California 90025 (US); Wong, Chee Yee, London N1 2XH (GB); Bradford, Simon, Teddington Middlesex TW11 (GB); Alfthan, Niilo, 33100 Tampere (FI); Aarras, Mikko, 00400 Helsinki (FI); Christensen, Claus Allan, 2300 Kobenhavn S (DK)
(74) Representative: Khan, Mohammed Saiful Azam

(57) **Abstract**

An electronic display for an electronic device, the display being arranged to be able to indicate one or more user commands on the display, one or more of the user commands being indicatable on the display to be associated with a particular movement direction, and wherein the display is arranged to be moveable in that direction with respect to the electronic device to provide signalling to initiate the user command associated with that particular direction.

## Description

### Field of the Invention

The present invention relates to electronic displays for electronic devices, user interfaces for electronic devices and associated electronic devices. Associated methods, including methods of assembly are also within the present disclosure.

The electronic displays may or may not be for electronic devices with radiotelephone functionality. The electronic displays may or may not be for electronic devices with audio (e.g. voice and/or music, including MP3 format or other audio format) and/or image (e.g. still/video image) recording/playing functionality. The electronic displays may or may not be for electronic devices which are designed to be handheld in use and/or user portable. Such handheld devices need not necessarily be handheld in use.

### Background of the Invention

As electronic devices become increasingly compact and/or increasingly complex, for example, by being able to perform a number of different functions, there is a need to make electronic device user interfaces which can be used with relative ease.

### Summary of the Invention

According to a first aspect, the present invention provides an electronic display for an electronic device, the display being arranged to be able to indicate one or more user commands on the display, one or more of the user commands being indicatable on the display to be associated with a particular movement direction, and wherein the display is arranged to be moveable in that direction with respect to the electronic device to provide signalling to initiate the user command associated with that particular direction.

A plurality (e.g. two or more) of the user commands may each be indicatable on the display to be associated with a respective particular movement direction, and wherein the display is arranged to be moveable in that direction with respect to the electronic device to provide signalling to initiate the user command associated with the respective particular direction.

The display may comprise four sides and one or more user commands may be indicatable on one or more sides of the display.

The display may be arranged such that the user commands may be indicatable around part, a substantial part, and/or substantially all of the perimeter of the display.

The display may be arranged to be moveable in a single plane. The display may be arranged to be slideably moveable in a (e.g. single) plane. The display may be moveable in a plane parallel to the face of the electronic device to which it is attachable.

The display may be arranged to be moveable in four orthogonal directions with respect to a central zero movement position. The display may be arranged to be moveable in eight directions with respect to a central zero movement position, each direction equally spaced angularly around the central zero movement position.

The display may be arranged to be moveable in and/or out of the plane of the display. Thus, depression and /or pulling of the display may initiate a user command.

The display may additionally be touch-sensitive to user input. Thus, modest depression, which does not cause movement of the display in/out of the plane of the display, of a region of the display may initiate a user command.

The display may be arranged to move in a plurality of planes with respect to the face of the electronic device to which it is attachable. The display may be slideably moveable in a plane parallel to the face of the electronic device to which it is attachable and also moveable in a plane orthogonal to a plane parallel to the face of the electronic device to which it is attachable, movement in each of these planes initiating user command signalling. In the case that the display is attached to the front face of the device, this would permit depression of the display and sliding of the display with respect to a front face of the device to initiate user command signalling.

The display may be arranged to be a soft key, the user command indicated on the display being changeable according to the current menu position in the menu of the user interface of the electronic device.

The display may be a display for a handheld electronic device. The display may be for a communications device, such as a radiotelephone (including those commonly known as a cellular mobile phone).

The display may be arranged to have a number of states, a first state providing user command signalling associated with movement and a second state in which the display does not associate movement with user command signalling. This allows (e.g. user) control of association of movement with user command signalling.

The display may be lockable into one or more movement directions. The display may be arranged to be lockable to inhibit user movement of the display. Thus, accidental initiation of a user command can be inhibited in the case, for example, the electronic device comprising the display is being carried in the pocket of a user.

There may be one or more electronic components of the display which are not moveable. An exposed portion of the display may be moveable. An unexposed portion of the display may not be moveable. The unexposed portion may be hidden beneath the exposed portion. The unexposed portion may be housed within the housing of the electronic device.

According to a second aspect the present invention provides an electronic device comprising an electronic display, the display being arranged to be able to indicate one or more user commands on the display, one or more of the user commands being indicatable on the display to be associated with a particular movement direction, and wherein the display is arranged to be moveable in that direction with respect to the electronic device to provide signalling to initiate the user command associated with that particular direction.

The device may comprise an additional display which is not moveable with respect to the electronic device. The additional display may be comparatively large compared to the moveable display.

The display may be arranged to have a number of states, a first state providing user command signalling associated with movement and a second state in which the display does not associate movement with user command signalling.

In the second state the moveable display may be arranged to indicate one or more of the time, date, and/or missed calls. In the second state, the additional display may be in an idle state.

According to a third aspect, the present invention provides an electronic device user interface comprising an electronic display, the display being arranged to be able to indicate one or more user commands on the display, one or more of the user commands being indicatable on the display to be associated with a particular movement direction, and wherein the display is arranged to be moveable in that direction with respect to the electronic device to provide signalling to initiate the user command associated with that particular direction.

In a fourth aspect, the present invention provides computer code for an electronic display for an electronic device, the display being arranged to be able to indicate one or more user commands on the display, one or more of the user commands being indicatable on the display to be associated with a particular direction, and wherein the display is arranged to be moveable in that direction with respect to the electronic device to provide signalling to initiate the user command associated with that particular direction, the computer code arranged to
control indications of user commands on particular positions on the display, the particular positions being associated with a particular movement direction;
associate movement of the display in a particular direction with the associated user command; and
control the device to perform the movement indicated user command.

One or more aspects, embodiments, features of aspects/embodiments in isolation and/or in one or more various combination are within the scope of the disclosure, whether or not specifically disclosed in isolation or in combination. Corresponding means for performing the functions discussed are within the scope of the invention. Associated methods, including methods of assembly are also within the present disclosure.

### Brief Description of Figures

Specific embodiments of the invention will be described with reference to the accompanying figure in which :
Figure 1 illustrates a plan view of an electronic device according to one embodiment of the present invention.
Figure 2 shows the moveable display of Figure 1 providing a command signal to a signal processor.

### Description of Specific embodiments

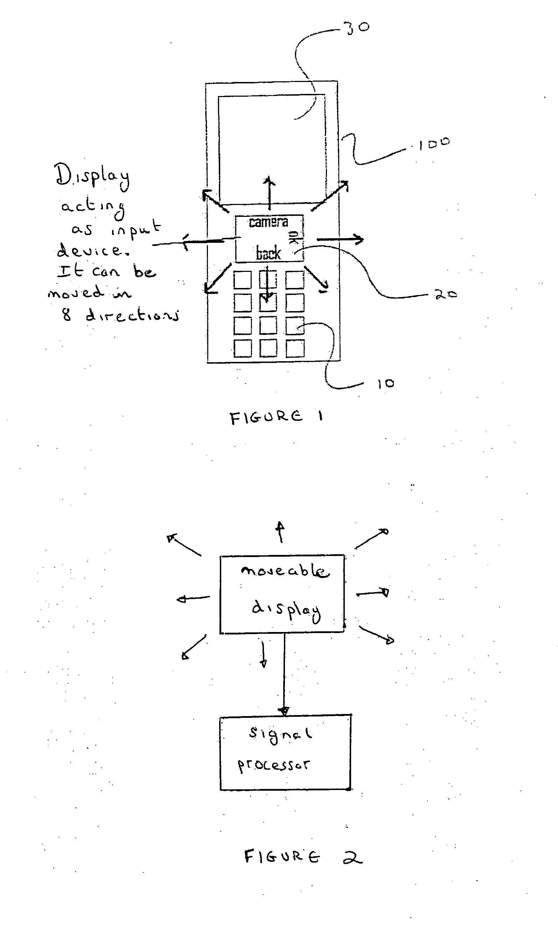

One embodiment of the invention is shown in Figure 1. In this case, the electronic device is a mobile cellular phone 100 having a camera (not shown). The phone 100 is able to perform a number of different functions, including allowing the transmission of video calls/data via the radiochannel. The phone 100 is also able to play music of an MP3 format and store contact information. The phone can be considered to be a multi-function device. The phone 100 is sized so that it can be handheld in use (although it doesn't necessarily have to be handheld in use).

The front face of the phone is shown in Figure 1. It comprises a user interface comprising a keypad 10, moveable display 20 and a static display 30. The static display 30 is placed towards the top of the phone 100, the keypad 10 towards the bottom and the moveable display 30 inbetween the keypad 10 and static display 30. The static display 30 is far larger than the moveable display 20. Keypads 10 and the static display 30 perform conventional functions.

The moveable display 20 is moveable and has a central zero movement position. It can be moved in eight directions from this central position. There are four orthogonal positions (which can be considered to be the four principal directions of a compass i.e. "north", "east", "south", "west") and four additional directions equally angularly spaced between the four orthogonal positions ("north-east", "south-east", "south-west", "north-west"). It will be appreciated that the directions are not necessarily points of a compass and are used for illustration only.

The display 20 is slideably moveable in a plane parallel to the front face of the phone 100. In other embodiments, the display may be arranged to be alternatively or additionally tilted with respect to a plane parallel to the front face of the phone 100. Movement of the display 20 is associated with one or more user commands.

User commands are indicated on the display 20 around the perimeter of the display 20. It will be appreciated that the actual user commands indicated on the display varies according to position in the menu structure of user interface software of the phone 100. In Figure 1, the display is rectangular, and three user commands ("camera", "ok" and "back") are indicated on three of the four sides of the rectangular display 20. The "camera" user command is indicated in the "north"/"up" direction, "ok" in the "east"/"right" direction, and "back" in the "south"/"down" direction. Thus, for example, movement of the display 20 relative to the front face of the phone 100 will initiate signalling which will switch the phone 100 into a camera mode of the phone 100.

The phone 100 is arranged such that the association of movement of the display 20 with user commands can be turned off. Thus, accidental initiation of a user command will be preventable. In this off/idle mode, the moveable display 20 may indicate one or more of time, date, missed calls. The static display 30 (which could be the main display of the device/phone 100) could also be arranged to be in an idle state in which it is in a low power consumption state. Rather than indicating the time, date, missed calls etc on the main display 30, this information is indicated on the comparatively small moveable display 20. This could provide advantages including reduced power consumption in the phone 100. The moveable display 20 can be considered to be the secondary display of the phone 100.

Movement of the display 20 can be detected by many mechanisms including the use of one or more of electrical, mechanical, and/or electromechanical sensors.

Fig. 2 shows the moveable display of Fig. 1 providing a command signal to a signal processor. In this illustration, the moveable display fulfils the role of a display means moveable in a selectable direction of movement on or in an electronic device for selecting a command corresponding to a selected direction of movement. Thus, the moveable display comprises means for providing a command signal corresponding to the selected direction. The signal processor can be viewed in general as means for initiating a response to the command signal from the moveable display corresponding to the selected direction of movement with respect to the device within which or in which it is installed.

A user of the device of Figs. 1 and 2 therefore is able to move the moveable display in a selectable direction of movement on or in an electronic device to select a command corresponding to a selected direction of movement wherein the display is for indicating one or more commands selectable according to direction. The signal processor of Fig. 2 initiates a response to the command corresponding to the selected direction of movement of the moveable display in the electronic device.

It will be appreciated that many modifications can be made to the invention without departing from the scope thereof. For example, the moveable display 20 could be provided on the rear face of the device, and the moveable display 20 may not be rectangular. There may be one or more electronic components of the display 20 which are not moveable. The unexposed portion may be hidden beneath the exposed portion. The unexposed portion may be housed within the housing of the phone 100. More than one moveable display 20 may be provided on an electronic device. The moveable display 20 may be a main display of the device. The device may not have any other display than the moveable display 20.

While there have been shown and described and pointed out fundamental novel features of the invention as applied to preferred embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An electronic display for an electronic device, the display being arranged to be able to indicate one or more user commands on the display, one or more of the user commands being indicatable on the display for association with a particular movement direction, and wherein the display is arranged for movement in that direction with respect to the electronic device to provide signalling to initiate the one or more user commands associated with that particular movement direction.

2. The display of claim 1, wherein a plurality of user commands are each indicatable on the display for association with a respective particular movement direction, and wherein the display is arranged for movement in that direction with respect to the electronic device to provide signalling to initiate the one or more user commands associated with the respective particular movement direction.

3. The display of claim 1, wherein the display comprises four sides and one or more user commands are indicatable on one or more sides of the display.

4. The display of claim 1, wherein the display is arranged to be moveable in a single plane.

5. The display of claim 1, wherein the display is arranged to be slideably moveable in a plane.

6. The display of claim 1, wherein the display is arranged to be moveable in a plane parallel to the face of the electronic device to which it is attachable.

7. The display of claim 1, wherein the display is arranged to be moveable in four orthogonal directions with respect to a central zero movement position.

8. The display of claim 1, wherein the display is arranged for movement in eight directions with respect to a central zero movement position, each direction equally spaced angularly around the central zero movement position.

9. The display of claim 1, wherein the display is arranged for movement in and/or out of the plane of the display.

10. The display of claim 1, wherein the display is additionally touch-sensitive to user input.

11. The display of claim 1, wherein the display is arranged for slideable movement in a plane parallel to the face of the electronic device to which it is attachable and also moveable in a plane orthogonal to a plane parallel to the face of the electronic device to which it is attachable, movement in each of these planes for initiating user command signalling.

12. The display of claim 1, wherein the display is arranged to be a soft key, the user command indicated on the display for changing according to a current menu position in a menu of a user interface of the electronic device.

13. The display of claim 1, wherein the display is for a handheld electronic device.

14. The display of claim 1, wherein the display is for a communications device.

15. The display of claim 1, wherein the display is arranged for use in a number of states, a first state providing user command signalling associated with movement and a second state in which the display does not associate movement with user command signalling.

16. The display of claim 1, wherein the display is arrangeable to inhibit accidental initiation of a user command.

17. The display of claim 1, wherein one or more electronic components of the display are not moveable with respect to the electronic device.

18. An electronic device comprising an electronic display, the display arranged for indicating one or more user commands on the display, one or more of the user commands for indication on the display for association with a particular movement direction, and wherein the display is arranged for movement in that direction with respect to the electronic device to provide signalling to initiate the one or more user commands associated with that particular movement direction.

19. The device of claim 18, wherein the device comprises an additional display which is not moveable with respect to the electronic device.

20. The device of claim 18, wherein the display is arranged to have a number of states, a first state providing user command signalling associated with movement and a second state in which the display does not associate movement with user command signalling.

21. The device of claim 18, wherein the device comprises an additional display, and wherein the moveable display is arranged such that in the second state the moveable display may be arranged to indicate one or more of time, date, and/or missed calls and the additional display is in an idle state.

22. An electronic device user interface comprising an electronic display, the display arranged for indicating one or more user commands on the display, one or more of the user commands for indication on the display for association with a particular movement direction, and wherein the display is arranged for movement in that direction with respect to the electronic device to provide signalling to initiate the one or more user commands associated with that particular movement direction.

23. Computer code for an electronic display for an electronic device, the display arranged for indicating one or more user commands on the display, one or more of the user commands for indication on the display for association with a particular direction, and wherein the display is arranged for movement in that direction with respect to the electronic device to provide signalling to initiate the one or more user commands associated with that particular direction, the computer code arranged to
control indications of user commands on particular positions on the display, the particular positions for association with corresponding particular movement directions;
associate movement of the display in a particular direction with an associated user command; and
control the device to perform the movement indicated user command.

24. Means for electronically displaying for an electronic device, the means for electronically displaying arranged for indicating one or more user commands on the means for electronically displaying, said one or more user commands for indication on the means for electronically displaying for association with a particular movement direction, and wherein the means for electronically displaying is arranged for movement in that direction with respect to the electronic device to provide signalling to initiate a user command associated with that particular movement direction.

25. An electronic device comprising means for electronically displaying, the means for electronically displaying arranged for indicating one or more user commands on the means for displaying, one or more of the user commands for indication on the means for electronically displaying for association with a particular movement direction, and wherein the means for electronically displaying is for movement in that direction with respect to the electronic device to provide signalling to initiate a user command associated with that particular movement direction.

26. An electronic device user interface comprising means for electronically displaying, the means for electronically displaying arranged for indicating one or more user commands on the means for displaying, said one or more user commands indicatable on the means for displaying for association with a particular movement direction, and wherein the means for displaying is arranged for movement in that direction with respect to the electronic device to provide signalling to initiate a user command associated with that particular movement direction.

27. Method, comprising:
moving a moveable display in a selectable direction of movement on an electronic device to select a command corresponding to a selected direction of movement wherein said display is for indicating one or more commands selectable according to direction, and
initiating a response to said command corresponding to said selected direction of movement in said electronic device.

28. Device, comprising:
display means moveable in a selectable direction of movement on said device for selecting a command corresponding to a selected direction of movement wherein said display means is for providing a command signal corresponding to said selected direction; and
means for initiating a response to said command signal corresponding to said selected direction of movement in said device.

29. The method of claim 27, wherein said moving is a sliding movement of said moveable display.

30. The device of claim 28, wherein said movement is a sliding movement of said display means.

31. A method of assembling an electronic device and electronic display, the display arranged for indicating one or more user commands on the display, one or more of the user commands for indication on the display for association with a particular movement direction, and wherein the display is arranged for movement in that direction with respect to the electronic device to provide signalling to initiate the one or more user commands associated with that particular movement direction, and wherein the method comprises assembling the device with the display such that movement of the display in a particular direction provides signalling to initiate the one or more user commands associated with that particular movement direction.

32. A method of assembling an electronic device user interface with an electronic display, the display arranged for indicating one or more user commands on the display, one or more of the user commands for indication on the display for association with a particular movement direction, and wherein the display is arranged for movement in that direction with respect to the electronic device to provide signalling to initiate the one or more user commands associated with that particular movement direction, and wherein the method comprises assembling the user interface with the display such that movement of the display in a particular direction provides signalling to initiate the one or more user commands associated with that particular movement direction..
